# FASCICULE DE BREVET EUROPEEN

(11) **EP 0 540 395 B1**
(45) Date de publication et mention de la délivrance du brevet: **18.09.1996**
(21) Numéro de dépôt: 92402835.0
(22) Date de dépôt: 16.10.1992
(51) Int. Cl.: G01V 8/10

(54) **Dispositif de détection passive d'un tir d'artillerie ou analogue**
Passives Gerät zum Feststellen von Artillerieabfeuerns oder desgleichen
Passive artillary fire or analogue detector

(30) Priorité: 21.10.1991 FR 9112957
(43) Date de publication de la demande: 05.05.1993
(73) Titulaire: BERTIN & CIE, F-78373 Plaisir Cédex (FR)
(72) Inventeur: Guern, Yves, F-13490 Jouques (FR); Crepin, Pierre-Jean, F-13770 Venelles (FR); Noack, Jean-Claude, F-13480 Cabries (FR)
(74) Mandataire: Ramey, Daniel

(56) Documents cités:
- EP-A- 0 297 665
- EP-A- 0 379 425
- DE-A- 1 798 281
- FR-A- 1 570 413
- US-A- 3 848 129
- US-A- 3 961 194

## Description

L'invention concerne un dispositif de détection passive d'un tir de projectile d'artillerie ou analogue.

Il est souvent impossible de déterminer à vue l'emplacement d'une pièce d'artillerie ou d'une batterie ennemie, en raison de son éloignement et/ou de son masquage par des reliefs de terrain ou des obstacles quelconques.

La localisation des engins ou plate-formes de lancement de roquettes et de missiles pose les mêmes problèmes.

On connaît par le document EP-A-0 297 665 un dispositif de détection d'une source de rayonnement telle qu'un projectile ou un missile, qui comprend des moyens optiques de formation d'une image d'une scène observée juste au-dessus de l'horizon sur un ensemble de photodétecteurs reliés à des moyens de traitement de l'information, ce dispositif ne permettant pas la détection d'un projectile ou d'un missile masqué à la vue par un obstable ou une couverture nuageuse épaisse et ne permettant pas non plus de détecter le point de départ du projectile ou du missile.

L'invention a pour objet un dispositif permettant de détecter à coup sûr le tir d'un projectile par une pièce d'artillerie ou analogue, de jour comme de nuit et quelles que soient les conditions atmosphériques.

L'invention a également pour objet un dispositif de ce type qui permet un détection passive, et donc non détectable par l'ennemi, du tir d'un projectile par une pièce d'artillerie ou analogue.

Elle propose donc un dispositif de détection passive d'un tir de projectile d'artillerie ou analogue, comprenant des moyens optiques de formation d'une image d'une zone observée à faible hauteur au-dessus de l'horizon sur un ensemble de photodétecteurs, et un système de traitement de l'information recevant les signaux délivrés par les photodétecteurs, caractérisé en ce que ce système est conçu pour traiter ces signaux selon deux modes différents dont l'un permet la détection d'une lueur produite par le tir d'un projectile et diffusée par l'atmosphère, et dont l'autre permet la détection du projectile lui-même.

Ainsi, lorsque le temps est clair et la visibilité bonne, la détection d'un tir par le dispositif selon l'invention peut être réalisée par détection du projectile lui-même, qui est bien visible (en particulier en infrarouge) en contraste sur le fond de ciel. Par contre, lorsque la couverture nuageuse est importante, la lueur produite par le tir est diffusée par l'atmosphère et peut également être détectée, en particulier dans l'infrarouge.

Avantageusement, le dispositif selon l'invention comprend des moyens de sélection du mode de traitement des signaux en fonction de la couverture nuageuse dans la zone observée et de la visibilité dans cette zone.

Ces moyens de sélection peuvent être à commande manuelle ou automatique.

En variante, le dispositif selon l'invention peut comprendre deux systèmes de traitement de l'information fonctionnant simultanément, dont l'un traite les signaux délivrés par les photodétecteurs pour la détection d'une lueur produite par un tir et dont l'autre traite ces signaux pour la détection du projectile.

Les photodétecteurs utilisés sont de préférence sensibles au rayonnement infrarouge limité à une bande de longueurs d'onde comprises entre 3 et 5 µm environ, dans laquelle le signal de fond de ciel est relativement faible et les variations jour-nuit sont négligeables.

Selon une autre caractéristique de l'invention, le mode de traitement des signaux délivrés par les photodétecteurs pour la détection de la lueur consiste à repérer un groupe de photodétecteurs dont les signaux présentent un pic d'intensité lumineuse à durée très brève de quelques millisecondes et à front raide et décroissance exponentielle rapide, puis à analyser ces signaux pour constater leur corrélation temporelle avec un signal de lueur typique.

Selon encore une autre caractéristique de l'invention, le mode de traitement des signaux délivrés par les photodétecteurs pour la détection du projectile lui-même consiste à examiner les variations dans le temps des signaux des photodétecteurs pour repérer un photodétecteur dont le signal présente une surintensité lumineuse d'une durée de quelques dizaines de millisecondes, puis à examiner les signaux des photodétecteurs voisins pour constater leur corrélation spatiale avec un signal de projectile typique.

Dans un mode de réalisation préféré de l'invention, le dispositif comprend des moyens d'échantillonnage et de numérisation des signaux délivrés par les photodétecteurs et des mémoires du type FIFO d'enregistrement des signaux échantillonnés et numérisés, auxquelles le ou les systèmes de traitement de l'information sont reliés.

Les moyens précités de formation d'image comprennent un groupe d'objectifs dont les axes optiques sont coplanaires et divergents en direction de la zone observée et dont les champs se recoupent partiellement.

Au moins une barrette linéaire de photodétecteurs infrarouges est associée à chaque objectif et disposée dans le plan focal de celui-ci.

On peut bien entendu remplacer chaque barrette par un ensemble matriciel de photodétecteurs, dans lequel on sélectionne une ou plusieurs rangées de photodétecteurs, qui peuvent être adjacentes ou séparées les unes des autres d'un nombre prédéterminé ou variable de rangées de photodétecteurs.

L'invention sera mieux comprise et d'autres caractéristiques, détails et avantages de celle-ci apparaitront plus clairement à la lecture de la description qui suit, faite à titre d'exemple en référence aux dessins annexés dans lesquels :
la figure 1 illustre schématiquement les conditions opérationnelles d'un dispositif de détection selon l'invention;
la figure 2 représente schématiquement la structure de ce dispositif;
les figures 3 et 4 sont des graphes représentant des variations dans le temps des signaux délivrés par les photodétecteurs, respectivement dans le cas de la détection d'une lueur et dans celui de la détection d'un projectile.

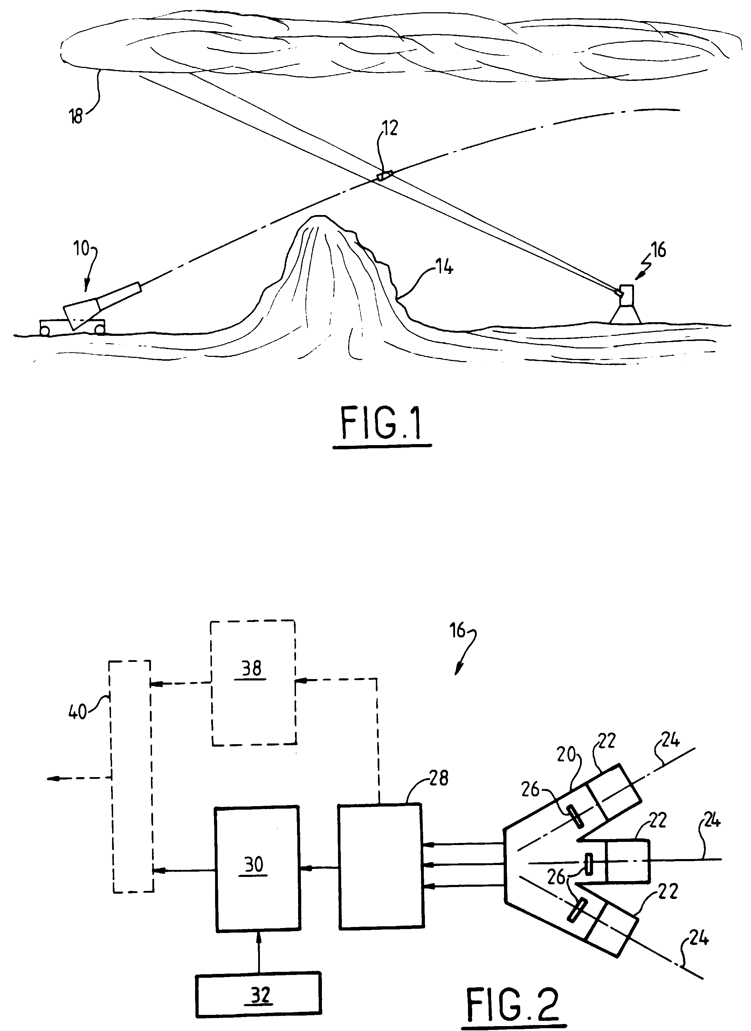

On a représenté schématiquement en figure 1 une pièce d'artillerie 10 ennemie tirant un projectile 12 sur un objectif quelconque qui se trouve au-delà d'une élévation de terrain 14 dissimulant la pièce d'artillerie 12 au regard d'un observateur situé du côté de l'objectif visé. Le dispositif selon l'invention, désigné par la référence 16, est destiné à détecter de façon passive et automatique, soit le projectile 12 lui-même, soit la lueur produite par le tir et diffusée par l'atmosphère et notamment par la couverture nuageuse 18, soit à la fois le projectile 12 et la lueur, en fonction des conditions atmosphériques, afin de déterminer la position de la pièce 10 et/ou le début de la trajectoire du projectile.

La lueur est le phénomène lumineux, quelle qu'en soit la longueur d'onde, qui accompagne le tir d'un projectile : une flamme, un jet de gaz chauds, etc.

Le dispositif 16 selon l'invention comprend essentiellement, comme représenté en figure 2, un groupe 20 d'objectifs 22 de prise de vues, dont les axes optiques 24 sont coplanaires et divergent les uns des autres de telle sorte que leurs champs se recoupent et que l'ensemble optique 20 ait un champ d'observation continu relativement important, au niveau de l'horizon ou légèrement au-dessus de celui-ci.

Au moins une barrette linéaire 26 de photodétecteurs infrarouges est associée à chaque objectif 22 et située dans le plan focal de celui-ci, sur l'axe optique.

Dans l'exemple représenté en figure 2, qui est donné à titre non limitatif, on utilise trois objectifs de 50 mm à grande ouverture numérique, à chacun desquels est associée une barrette linéaire de 512 photodétecteurs élémentaires, tels que des photodiodes CCD infrarouges, le champ total observé étant de l'ordre de 90° en azimut et de 1 milliradian en site.

Des circuits de refroidissement (non représentés) sont associés aux photodétecteurs pour les maintenir à une température comprise entre -40 et -200 °C, selon leur type.

Les sorties des photodétecteurs sont reliées, par des circuits d'échantillonnage et des circuits de conversion analogique-numérique non représentés, aux entrées de mémoires 28 du type FIFO où sont enregistrées. les valeurs numérisées des signaux échantillonnés. La fréquence d'échantillonnage est de l'ordre du kHz et les mémoires 28 ont une capacité suffisante (d'environ 1 Megaoctet), pour l'enregistrement des images élémentaires échantillonnées fournies par les photodétecteurs pendant une durée de l'ordre de quelques centaines de millisecondes.

Un système 30 de traitement de l'information, relié aux mémoires 28, est prograirmé de deux façons différentes pour détecter et identifier, dans les informations enregistrées dans les mémoires 28, soit un signal correspondant à une lueur produite par un tir de projectile et diffusée par l'atmosphère, soit un signal représentant le projectile lui-même sur sa trajectoire.

Des moyens 32 sont associés au système 30 de traitement de l'information pour sélectionner le mode de traitement approprié en fonction des conditions atmosphériques, c'est-à-dire de la visibilité dans la zone observée et de la couverture nuageuse de cette zone.

Ces moyens 32 peuvent être à commande manuelle ou bien peuvent fonctionner automatiquement, lorsqu'ils sont eux-mêmes associés à des moyens de mesure de visibilité et de couverture nuageuse.

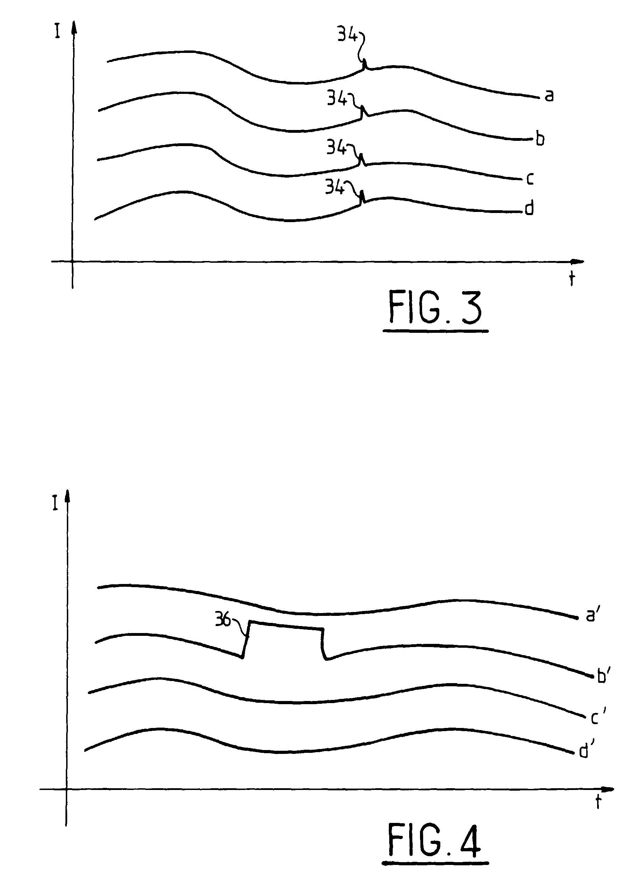

Le fonctionnement de ce dispositif va être décrit en référence aux figures 3 et 4.

En figure 3, les courbes a, b, c et d représentent les variations dans le temps des signaux de sortie de quatre photodétecteurs consécutifs d'une barrette linéaire 26, c'est-à-dire les variations de l'intensité lumineuse dans la bande 3-5 µm des portions de ciel dont les images sont formées sur ces photodétecteurs par l'objectif 22 associé à la barrette 26. Ces variations dans le temps sont relativement faibles et lentes, ce qui permet de détecter sur ces courbes un pic 34 correspondant à la lueur produite par le tir d'un projectile et diffusée par l'atmosphère et/ou par la couverture nuageuse 18. Ces pics 34 se caractérisent par une amplitude très faible, inférieure de plusieurs ordres de grandeur à celle du signal de fond de ciel, par un front de montée très raide et par une décroissance exponentielle rapide. Typiquement, le pic 34 représentant le signal de lueur a une durée de quelques millisecondes et apparaît simultanément sur les signaux de sortie de quelques dizaines de photodétecteurs.

Le traitement réalisé par le système informatique 30 consiste alors à repérer tout d'abord un groupe de photodétecteurs dont les signaux de sortie présentent un pic 34 susceptible de correspondre à un signal de lueur, puis à analyser dans le temps les signaux de sortie de ces photodétecteurs pour déterminer s'il y a corrélation temporelle avec un signal de lueur typique.

Le système informatique 30 produit alors un signal d'alerte, indiquant la détection d'un tir de projectile et fournit également un angle de gisement à partir de la position des photodétecteurs repérés dans la barrette linéaire 26.

Plusieurs dispositifs 16 selon l'invention, éloignés les uns des autres et détectant le même tir, permettent par triangulation de déterminer approximativement la position de la pièce d'artillerie correspondante.

En figure 4, les courbes a′, b′, c′ et d′ représentent les variations dans le temps des signaux de sortie de quatre photodétecteurs consécutifs, et dont l'une, la courbe b′, comporte un signal 36 correspondant à la détection du projectile 12 sur le fond de ciel. Typiquement, ce signal 36 a une durée de l'ordre de 20 à 100 millisecondes environ et ne peut se retrouver que dans les signaux de sortie d'un très faible nombre de photodétecteurs ( un ou deux dans le cas d'un obus).

Dans ce cas, le traitement réalisé par le système informatique 30 consiste à analyser les variations dans le temps des signaux de sortie des photodétecteurs pour repérer un signal susceptible d'être un signal 36 de projectile, à identifier le photodétecteur dont est issu ce signal et à analyser les signaux de sortie des photodétecteurs adjacents pour constater leur corrélation spatiale avec un signal de projectile typique.

Le système informatique 30 produit alors un signal d'alerte indiquant la détection d'un projectile et peut fournir également un angle de gisement à partir de la position du photodétecteur repéré dans la barrette linéaire 26. Dans ce cas, il peut être avantageux d'associer à chaque objectif 22 plusieurs barrettes linéaires de photodétecteurs, disposées les unes au-dessus des autres dans le plan focal de l'objectif ou d'utiliser un ensemble matriciel de photodétecteurs dont on sélectionne a priori plusieurs rangées, de façon à obtenir une confirmation de la détection d'un projectile et du début de sa trajectoire.

Selon une variante de l'invention, le dispositif 16 de détection peut comprendre, comme représenté en pointillé en figure 2, un second système 38 de traitement de l'information agencé en parallèle sur le premier système 30 entre les mémoires 28 et un circuit de décision 40 aux entrées duquel sont appliquées les sorties des deux systèmes 30, 38. L'un des deux systèmes 30, 38 traite les signaux de sortie des photodétecteurs pour la détection d'un signal de projectile, tandis que l'autre système traite ces signaux de sortie pour la détection d'une lueur produite par le tir et diffusée par l'atmosphère.

Dans ce cas, le système permettant le traitement le mieux adapté aux conditions du moment, fournit un signal d'alerte qui est pour autant que possible validé (ou invalidé) par le résultat du traitement par l'autre système, ce qui permet une diminution du taux de fausses alarmes et une augmentation de la fiabilité et du taux de probabilité de la détection.

De façon générale, l'invention offre les avantages suivants :
- la détection d'un tir de projectile est passive et donc non-détectable par l'ennemi,
- l'observation d'une bande de ciel est continue,
- le temps de réponse du dispositif selon l'invention est de l'ordre de la seconde et permet une alerte quasi-immédiate,
- la détection se fait de jour comme de nuit,
- le dispositif selon l'invention est adaptable aux variations des conditions atmosphériques, ou s'y adapte automatiquement.

## Revendications

1. Dispositif de détection passive d'un tir de projectile d'artillerie ou analogue, comprenant des moyens optiques (22) de formation d'une image d'une zone observée à faible hauteur au-dessus de l'horizon sur un ensemble (26) de photodétecteurs, et un système (30) de traitement de l'information recevant les signaux délivrés par les photodétecteurs, caractérisé en ce que ce système est conçu pour traiter ces signaux selon deux modes différents dont l'un permet la détection d'une lueur produite par le tir d'un projectile et diffusée par l'atmosphère, et dont l'autre permet la détection du projectile (12) lui-même.

2. Dispositif selon la revendication 1, caractérisé en ce qu'il comprend des moyens (32) de sélection du mode de traitement des signaux en fonction de la couverture nuageuse dans la zone observée et de la visibilité dans cette zone.

3. Dispositif selon la revendication 1, caractérisé en ce qu'il comprend deux systèmes (30, 38) de traitement de l'information et fonctionnant simultanément, dont l'un traite les signaux délivrés par les photodétecteurs pour la détection d'une lueur produite par un tir de projectile, et dont l'autre traite ces signaux pour la détection du projectile.

4. Dispositif selon l'une des revendications précédentes, caractérisé en ce que les photodétecteurs sont sensibles au rayonnement infrarouge.

5. Dispositif selon l'une des revendications précédentes, caractérisé en ce que la bande de sensibilité en longueur d'onde des photodétecteurs est comprise entre 3 et 5 µm environ.

6. Dispositif selon l'une des revendications précédentes, caractérisé en ce que le mode de traitement des signaux délivrés par les photodétecteurs pour la détection de la lueur consiste à repérer un groupe de photodétecteurs dont les signaux présentent un pic (34) d'intensité lumineuse à durée très brève de quelques millisecondes et à front raide et décroissance exponentielle rapide, puis à analyser ces signaux pour constater leur corrélation temporelle avec un signal de lueur typique.

7. Dispositif selon l'une des revendications précédentes, caractérisé en ce que le mode de traitement des signaux délivrés par les photodétecteurs pour la détection du projectile consiste à analyser les variations dans le temps des signaux des photodétecteurs pour repérer un photodétecteur dont le signal présente une surintensité lumineuse (36) d'une durée de quelques dizaines de millisecondes, puis à analyser les signaux des photodétecteurs voisins pour constater leur corrélation spatiale avec un signal de projectile typique.

8. Dispositif selon l'une des revendications précédentes, caractérisé en ce que les sorties des photodétecteurs sont reliées par des moyens d'échantillonnage et des moyens de numérisation à des mémoires (28) du type FIFO auxquelles le ou chaque système de traitement de l'information est relié.

9. Dispositif selon l'une des revendications précédentes, caractérisé en ce que les moyens de formation d'image comprennent un groupe d'objectifs (22) dont les axes optiques (24) sont coplanaires et divergents en direction de la zone observée et dont les champs se recoupent partiellement.

10. Dispositif selon la revendication 9, caractérisé en ce qu'au moins une barrette linéaire (26) de photodétecteurs infrarouges est associée à chaque objectif (22) et disposée dans le plan focal de celui-ci.

11. Dispositif selon l'une des revendications précédentes, caractérisé en ce qu'il est associé à une pluralité de dispositifs semblables éloignés les uns des autres pour localiser par triangulation la position d'un tir détecté par plusieurs dispositifs précités.

## Patentansprüche

1. Vorrichtung zur passiven Erfassung eines Artillerieprojektilschusses oder dergleichen, die optische Einrichtungen (22) zur Bildung eines Bildes einer mit geringer Höhe oberhalb des Horizontes überwachten Zone auf einer Gesamtheit (26) von Photodetektoren und ein System (30) zur Verarbeitung der Information, welches die durch die Photodetektoren gelieferten Signale empfängt, umfaßt, dadurch gekennzeichnet, daß dieses System ausgebildet ist, um diese Signale gemäß zwei verschiedenen Moden zu verarbeiten, wobei der eine die Erfassung eines durch den Schuß eines Projektiles erzeugten und durch die Atmosphäre verbreiteten Lichtscheines gestattet und wobei der andere die Erfassung des Projektiles (12) selbst gestattet.

2. Vorrichtung nach Anspruch 1, dadurch gekennzeichnet, daß sie Einrichtungen (32) zur Auswahl des Modus zur Verarbeitung der Signale in Abhängigkeit des Bedeckungsgrades in der überwachten Zone und der Sicht in dieser Zone umfaßt.

3. Vorrichtung nach Anspruch 1, dadurch gekennzeichnet, daß sie zwei Systeme (30, 38) zur Verarbeitung der Information umfaßt, die gleichzeitig arbeiten, wobei das eine die durch die Photodetektoren gelieferten Signale zur Erfassung eines durch einen Projektilschuß erzeugten Lichtscheines verarbeitet und wobei das andere diese Signale für die Erfassung des Projektiles verarbeitet.

4. Vorrichtung nach einem der vorhergehenden Ansprüche, dadurch gekennzeichnet, daß die Photodetektoren im wesentlichen auf Infrarotstrahlung empfindlich sind.

5. Vorrichtung nach einem der vorhergehenden Ansprüche, dadurch gekennzeichnet, daß der Wellenlänge-Empfindlichkeitsbereich der Photodetektoren ungefähr zwischen einschließlich 3 und 5µm beträgt.

6. Vorrichtung nach einem der vorhergehenden Ansprüche, dadurch gekennzeichnet, daß der Modus zur Verarbeitung der durch die Photodetektoren gelieferten Signale für die Erfassung des Lichtscheines darin besteht, eine Gruppe von Photodetektoren, deren Signale einen Peak (34) einer Lichtintensität sehr kurzer Dauer von einigen Millisekunden und steilem Anstieg sowie exponentiell schnellem Zerfall darstellt, zu lokalisieren, dann diese Signale zu analysieren, um deren zeitliche Korrelation mit einem typischen Lichtscheinsignal zu bestimmen.

7. Vorrichtung nach einem der vorhergehenden Ansprüche, dadurch gekennzeichnet, daß der Modus zur Verarbeitung der durch die Photodetektoren gelieferten Signale für die Erfassung des Projektiles darin besteht, die Veränderungen der Signale der Photodetektoren in der Zeit zu analysieren, um einen Photodetektor, dessen Signal einen intensiven Lichtfleck (36) einer Dauer von einigen zehn Millisekunden darstellt, zu lokalisieren, dann die Signale der benachbarten Photodetektoren zu analysieren, um deren räumliche Korrelation mit einem typischen Projektilsignal zu bestimmen.

8. Vorrichtung nach einem der vorhergehenden Ansprüche, dadurch gekennzeichnet, daß die Ausgänge der Photodetektoren über Einrichtungen zur Probenahme und Einrichtungen zur Digitalisierung mit Speichern (28) des FIFO-Typs verbunden sind, mit welchen das oder jedes System zur Verarbeitung der Information verbunden ist.

9. Vorrichtung nach einem der vorhergehenden Ansprüche, dadurch gekennzeichnet, daß die Einrichtungen zur Bildung eines Bildes eine Gruppe von Objektiven (22) umfassen, deren optische Achsen (24) koplanar sind und in Richtung der überwachten Zone divergieren und deren Felder sich teilweise überschneiden.

10. Vorrichtung nach Anspruch 9, dadurch gekennzeichnet, daß wenigstens eine lineare ladungsgekoppelte Schaltung (26) von Infrarot-Photodetektoren mit jedem Objektiv (22) verbunden ist und in der Fokalebene von diesem angeordnet ist.

11. Vorrichtung nach einem der vorhergehenden Ansprüche, dadurch gekennzeichnet, daß sie mit einer Vielzahl von ähnlichen, voneinander entfernten Vorrichtungen verbunden ist, um durch Triangulation die Position eines durch mehrere vorerwähnte Vorrichtungen erfaßten Schusses zu lokalisieren.

## Claims

1. Apparatus for passively detecting the firing of an artillery projectile or the like, the apparatus comprising optical means (22) for forming an image of an observed zone low above the horizon on a set (26) of photodetectors, and an information processing system (30) receiving the signals delivered by the photodetectors, the apparatus being characterized in that said system is designed to process the signals in two different modes, one of which enables a flash produced by the firing of a projectile and as diffused by the atmosphere to be detected, and the other of which enables the projectile (12) itself to be detected.

2. Apparatus according to claim 1, characterized in that it includes means (32) for selecting its signal processing mode as a function of the cloud cover in the observed zone and as a function of visibility in said zone.

3. Apparatus according to claim 1, characterized in that it includes two information processing systems (30, 38) operating simultaneously, one of which processes the signals delivered by the photodetectors to detect a flash produced by the firing of a projectile, and the other of which processes said signals to detect the projectile.

4. Apparatus according to any preceding claim, characterized in that the photodetectors are responsive to infrared radiation.

5. Apparatus according to any preceding claim, characterized in that the wavelength sensitivity band of the photodetectors lies in the range about 3 µm to about 5 µm.

6. Apparatus according to any preceding claim, characterized in that the mode of processing the signals delivered by the photodetectors to detect the flash consists in identifying a group of photodetectors whose signals present a light intensity peak (34) of very short duration, lasting a few milliseconds with a steep leading edge and steep exponential decay, and then in analyzing said signals to observe their time correlation with a typical flash signal.

7. Apparatus according to any preceding claim, characterized in that the mode of processing the signals delivered by the photodetectors for detecting the projectile consists in analyzing variation over time in the signals from the photodetectors to identify a photodetector whose signal presents excess light intensity (36) for a duration of several tens of milliseconds, and then in analyzing the signals from neighboring photodetectors to observe their spatial correlation with a typical projectile signal.

8. Apparatus according to any preceding claim, characterized in that the outputs from the photodetectors are connected via sampling means and via digitizing means to FIFO type memories (28) to which the, or each, information processing system is connected.

9. Apparatus according to any preceding claim, characterized in that the image forming means comprise a group of objective lenses (22) having optical axes (24) that are coplanar and that diverge towards the observed zone, with the fields thereof overlapping in part.

10. Apparatus according to claim 9, characterized in that at least one linear strip (26) of infrared photodetectors is associated with each objective lens (22) and is disposed in the focal plane thereof.

11. Apparatus according to any preceding claim, characterized in that it is associated with a plurality of similar apparatuses that are spaced apart from one another for the purpose of locating the position of a shot detected by a plurality of the above-mentioned apparatuses by triangulation.
